# EUROPEAN PATENT APPLICATION

(11) **EP 1 024 077 A1**
(43) Date of publication of application: **02.08.2000**
(21) Application number: 00200244.2
(22) Date of filing: 23.01.2000
(51) Int. Cl.: B62J 1/16, B62J 27/00

(54) **Child carrier on a bicycle and handlebar cushion**

(30) Priority: 30.01.1999 NL 1011179
(71) Applicant: Metaalwarenfabriek Melkert B.V., 2806 CE Gouda (NL)
(72) Inventor: Melkert, Pieter, 2821 BJ Stolwijk (NL)
(74) Representative: Van Assen, Jan Willem Bernard

(57) **Abstract**

The invention relates to a children's carrier for a bicycle which children's carrier is provided with a toy steering handle.
This concerns children's carriers that can be mounted on the steering handle of a bicycle.
According to the invention, a body of soft elastic material (5), covered with a piece of cloth or fabric (4), has been mounted on the steering rod (2) of the toy steering handle in order to protect the head of the child from knocking on the steering rod (2).
This body has the shape of a cut open cylinder (5) that fits around the steering rod (2) of the toy steering handle, whereby the cut (6) is closed with velcro or press fasteners (8).
The invention also relates to a soft elastic body (3) meant to be mounted on the steering rod (2) of the toy steering handle.

## Description

The invention relates to a children's carrier for a bicycle, which children's carrier is provided with a toy steering handle. This concerns children's carriers which can be mounted on the steering handle of a bicycle. A children's carrier of this type is known from Benelux Design Registration no 26653-00

Especially for small children it is important to provide for a protection of the head. When suddenly the bicycle comes to a stop or hits a hump in the road the child can easily bend forwardly with the head and knock the head on the toy steering handle of the front children's carrier, which can cause injury.
Sometimes children also fall asleep and they let their head rest on the unprotected hard toy steering handle, which is uncomfortable for the child.

The object of the invention is the removal of this objection and on the one hand providing an efficient protection on a front children's carrier with a toy steering handle and the other hand enlarging the comfort of the child when this rests either asleep or not with the head on the toy steering handle.

The object of the invention is reached in that the toy steering handle is provided with a body of elastic material which is mounted on the steering rod of the toy steering handle.

According to a preferential embodiment the body has the shape of a cut open cylinder of soft elastic material which is covered with cloth. The cylinder can be slid over the steering rod and the cut is closed for instance with velcro or press fasteners.

The invention is now elucidated referring to the accompanying drawing.
Fig 1. Shows a perspective view of the children's seat with the head cushion.
Fig. 2. Shows on a larger scale a perspective view of the same head cushion of fig. 1 in a spread open condition.

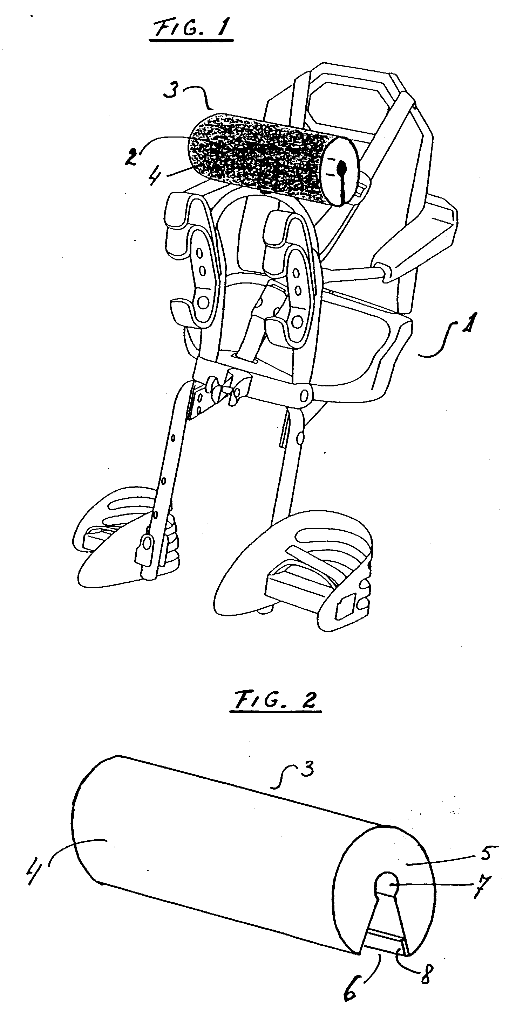

Fig. 1 shows the children's carrier generally indicated with 1. The fixed toy steering handle 2 is indicated with interrupted lines, whereas the head cushion 3 is provided with a cover 4. The head cushion 3 comprises a body 5 of elastic material such as for instance foam rubber or foamed plastic. This body is in the shown embodiment a cylinder 5 which is cut open at 6 until an interior diameter 7. The cover 4 comprises a piece of cloth or fabric that covers the cut 5 and the internal diameter 7. A velcro 8 is fastened on the cover 4, which velcro is closed after mounting the head cushion 3. Instead of a velcro 8 press fasteners (not shown) can be used for example as connecting means.

## Claims

1. Children's carrier for a bicycle, which children's carrier is provided with a toy steering handle, characterized in that the toy steering handle is provided with a body of elastic material (5) which is mounted on the steering rod (2) of the children's carrier (1).

2. Head cushion for children's carrier as in claim 1 characterized in that the body is a cut open cylinder (5) of elastic material, covered with a piece of cloth or fabric (4) that covers the cut (6) and the internal diameter (7) of the cylinder (5).

3. Head cushion for children's carrier as in claim 1 and 2 characterized in that at the location of the cut (6) in the cylinder (5) connecting means ( 8) are attached to the cover (4) as to keep the cut (6) closed.

4. Head cushion for children's carrier as in claim 1 , 2 and 3 characterized in that the connecting means (6) comprise of velcro or press fasteners.

5. Head cushion for children's carrier as in claim 1, 2, 3 and 4 characterized in that the cut open cylinder (5) comprises of foam rubber or foamed plastic.
